## Europäisches Patentamt

## European Patent Office

## Office européen des brevets

(19)

(11) Numéro de publication: **0 119 886
B1**

(12) **FASCICULE DE BREVET EUROPEEN**

(45) Date de publication du fascicule du brevet:
**19.11.87**

(21) Numéro de dépôt: **84400306.1**

(22) Date de dépôt: **15.02.84**

(51) Int. Cl.⁴: **G 06 F 12/14**

(54) **Procédé de protection d'un logiciel enregistré par un fournisseur sur un support magnétique portatif.**

(30) Priorité: **16.02.83 FR 8302515**

(43) Date de publication de la demande:
**26.09.84 Bulletin 84/39**

(45) Mention de la délivrance du brevet:
**19.11.87 Bulletin 87/47**

(84) Etats contractants désignés:
**AT BE CH DE FR GB IT LI LU NL SE**

(56) Documents cités:
**EP - A - 0 105 241**

**2nd USA-JAPAN COMPUTER CONFERENCE
PROCEEDINGS, 26-28 août 1975, Tokyo, Japan, pages
139-142, Montvale, US F.L. SINDELAR et al.: "A
two-level disk protection system"
IBM TECHNICAL DISCLOSURE BULLETIN, vol. 14, no.
11, avril 1972, page 3531, New York, US E.J. LENGYEL et
al.: "Computer program protection"**

(73) Titulaire: **BULL S.A., 121, Avenue de Malakoff,
F-75016 Paris (FR)**

(72) Inventeur: **Delorme, Yves, 94 avenue Gambetta,
F-75990 Paris Cedex 20 (FR)**

(74) Mandataire: **Doireau, Marc et al, BULL S.A. Industrial
Property Department 25 avenue de la Grande-Armée,
F-75016 Paris (FR)**

ACTORUM AG

## Description

L'invention concerne généralement un procédé de protection permettant le contrôle de la commercialisation d'un logiciel, et a plus particulièrement pour objet un procédé de protection d'un logiciel facturable enregistré par un fournisseur sur un support magnétique portatif.

D'une façon générale, un constructeur fournit avec toute machine de traitement de l'information le logiciel de base nécessaire au fonctionnement et à l'exploitation de cette machine. A ce logiciel de base indispensable peut s'ajouter des logiciels complémentaires optionnels.

Tout utilisateur peut en outre se créer un logiciel propre et devenir éventuellement à son tour un fournisseur pour d'autres utilisateurs.

Si le fournisseur d'un logiciel (logiciel de base et/ou logiciel complémentaire) vend un exemplaire de ce logiciel à un utilisateur, il est supposé ci-après que ce logiciel est vendu pour être chargé et exécuté sur une machine et une seule. Il faut donc éviter que ce logiciel ne puisse être exécuté simultanément sur plusieurs machines et imposer pour cela à tout utilisateur l'acquisition d'un logiciel en autant d'exemplaires que de machines sur lesquelles il veut les faire exécuter.

Il est important de résoudre ce problème afin de garantir les revenus du fournisseur et de permettre à ce dernier de garder le contrôle de la commercialisation de son logiciel.

Cependant, la solution retenue ne doit pas alourdir la procédure de distribution du logiciel, ce qui peut être inacceptable lorsque le fournisseur vise une large diffusion de celui-ci.

Le document antérieur constitué par l'article intitulé «Computer Program Protection» paru dans la revue «IBM Technical Disclosure Bulletin» volume 14, n° 11, avril 1972, page 3531, décrit un système de protection d'un programme qui n'est exécutable que sur une machine déterminée d'un constructeur.

Le document antérieur constitué par l'article intitulé «A two-level disk protection system» paru en août 1975 à la suite de la conférence «2nd USA-JAPAN computer conference proceedings» pages 139–142, décrit un double niveau de sécurité («software» et «hardware») pour la protection des informations enregistrées sur des disques magnétiques. La protection «software» est obtenue par l'utilisation d'un mot de passe qui permet de limiter l'accès des données qu'aux utilisateurs connaissant ce mot de passe, alors que la protection «hardware» est obtenue par un encryptage des données sur le disque.

Ces deux articles précités ont un même objectif qui est d'assurer la protection de programmes, alors que l'invention a pour objectif de protéger les revenus que peut tirer le propriétaire de programmes en contrôlant leur diffusion.

EP-A-0 105 241 qui est cité en vertu de l'article 54 (3) et (4) de la C.B.E. décrit un système qui se limite à interdire la duplication d'un programme enregistré sur un support tel qu'un disque souple selon un format non standard. le chargement et l'exécution de ce programme nécessitent de le recopier sur un disque souple en le convertissant en un format standard, cette conversion faisant intervenir un numéro d'identification d'un machine de sorte que cette machine seule pourra ensuite charger et exécuter ce programme.

L'invention vise à résoudre la protection du logiciel d'une façon à la fois efficace et avec plus de souplesse que les systèmes antérieurs.

A cet effet, elle propose un procédé de protection d'un logiciel diffusé par un fournisseur à des utilisateurs disposant au moins d'une machine de traitement de l'information sur laquelle et uniquement sur elle est rendu chargeable et exécutable ce logiciel, caractérisé en ce qu'il consiste:

a) au niveau du fournisseur:
– à enregistrer un exemplaire de ce logiciel sur un premier support magnétique portatif tel qu'une disquette dénommée disquette mère, ce logiciel n'étant pas affecté à une machine déterminée de l'utilisateur,
– à rendre cette disquette mère non directement duplicable,
– et à diffuser une disquette mère pour chaque exemplaire de logiciel acquis par l'utilisateur,

b) au niveau de l'utilisateur à l'aide d'un utilitaire de transformation:
– à transférer l'exemplaire de logiciel mémorisé sur une disquette mère sur un second support magnétique duplicable,
– à rendre exécutable cet exemplaire de logiciel mémorisé sur ce second support uniquement par une machine déterminée de l'utilisateur,
– et à remettre à zéro la disquette mère pour que celle-ci ne puisse pas donner naissance à un autre exemplaire de logiciel exécutable sur une autre machine.

Un tel procédé permet au fournisseur d'éviter qu'un exemplaire de logiciel soit chargeable et exécutable simultanément sur plusieurs machines tout en autorisant sa duplication.

Ce but est atteint par la mise en place successive de deux verrous. Le premier verrou consiste à interdire la duplication d'une disquette mère et le deuxième verrou consiste à affecter tout logiciel mémorisé sur un second support à une machine déterminée de l'utilisateur.

Ces verrous présentent l'avantage de pouvoir être mis en place aisément sans imposer de contraintes particulières en fonction du site ou du client de destination aussi bien à la fabrication des machines qu'à la création des disquettes mère. De plus, le client a éventuellement la possibilité de diffuser son propre logiciel suivant le même principe.

Il faut préciser que par logiciel on entend indifféremment:
– le logiciel de base d'une machine constitué par les programmes indispensables au fonctionnement et à l'exploitation de la machine,
– tout logiciel complémentaire du logiciel de base,
– et éventuellement les fichiers de données exploités par ces logiciels.

Il faut également préciser que l'invention envisage trois types de diffusion:
- la diffusion d'un logiciel de base et éventuellement de logiciels complémentaires,
- la diffusion d'un logiciel additionnel destiné à être ajouté à un logiciel déjà installé sur une machine,
- et la diffusion d'une nouvelle version de logiciel destinée à remplacer une version de logiciel périmée (ce cas se ramène en fait à celui de la diffusion d'un logiciel additionnel).

Les avantages, caractéristiques et détails propres à l'invention apparaîtront à l'aide de la description qui va suivre et qui illustre un mode de réalisation préférentiel du procédé conforme à l'invention.

La figure 1 représente schématiquement les différentes étapes du procédé pour la diffusion d'un logiciel initial dans le cas où la machine de l'utilisateur est au moins équipée d'une unité de disquette.

La figure 2 représente schématiquement les différentes étapes du procédé pour la diffusion d'un logiciel initial dans le cas où la machine de l'utilisateur n'est pas équipée d'une unité de disquette.

La figure 3 représente schématiquement les différentes étapes du procédé pour la diffusion d'un logiciel additionnel dans le cas où la machine de l'utilisateur est au moins équipée d'une unité de disquette.

La figure 4 représente schématiquement les différentes étapes du procédé pour la diffusion d'un logiciel additionnel dans le cas où la machine de l'utilisateur n'est pas au moins équipée d'une unité de disquette.

Soit une personne physique ou morale dénommée fournisseur disposant de logiciels facturables destinés à être diffusés à des utilisateurs.

La description qui va suivre envisage successivement les trois types de diffusion mentionnés précédemment.

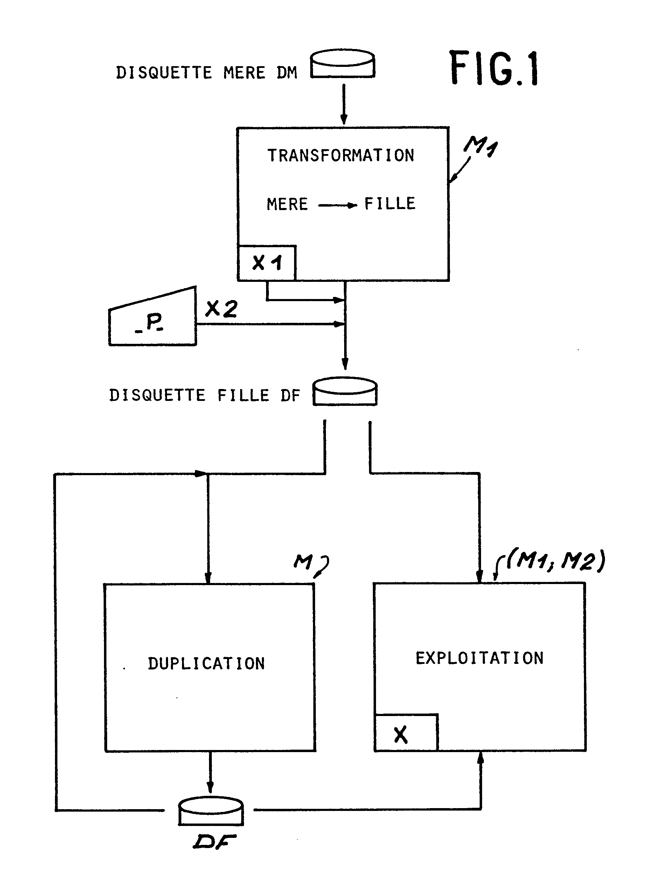

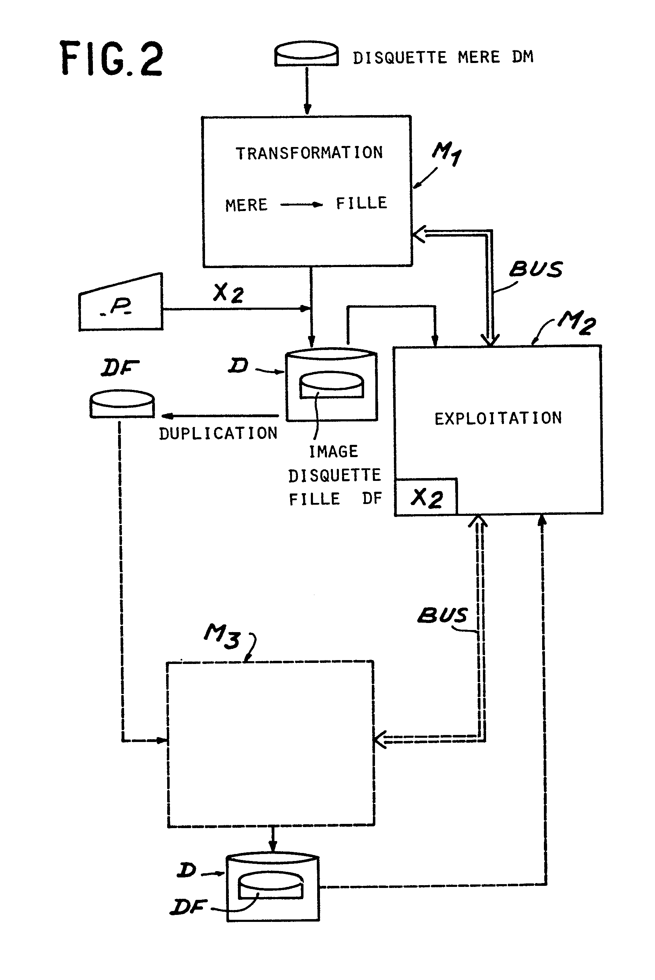

I - Diffusion d'un logiciel initial (figures 1 et 2)

Le fournisseur enregistre son logiciel initial sur un support d'enregistrement magnétique portatif tel qu'une disquette dénomée ci-après disquette mère. Il est créé autant de disquettes mère que d'exemplaires de logiciel à diffuser.

Chaque disquette mère présente deux caractéristiques principales:
- elle est formatée selon un format non standard pour qu'elle ne soit pas duplicable (par format non standard, il faut entendre un format spécifique qui ne permet pas la duplication de la disquette par les utilitaires standards disponibles sur le marché);
- et elle est banalisée, c'est-à-dire que le logiciel mémorisé sur cette disquette n'est pas affecté à une machine déterminée d'un utilisateur.

Dans son principe la solution n'interdit pas la possibilité d'exécuter le logiciel mémorisé sur la disquette mère, le fait que la disquette mère soit formatée suivant un format non standard pour interdire sa duplication ne signifiant pas nécessairement pour autant que cette possibilité est exclue. Cependant, il sera supposé ci-après que le logiciel mémorisé sur la disquette mère n'est pas directement chargeable et exécutable.

Dans ces conditions, un utilisateur qui a acquis une disquette mère ne pourra charger et exécuter le logiciel mémorisé sur cette disquette qu'après l'avoir transféré sur un second support d'enregistrement magnétique qui présente les caractéristiques suivantes:
a) ce second support est formaté suivant un format standard et sera donc duplicable,
b) le logiciel mémorisé sur ce second support est affecté à une machine déterminée et n'est exécutable que sur cette machine (la duplication du support peut toutefois être effectuée sur une machine quelconque).

Reprenons et développons ces deux caractéristiques.

Le second support est duplicable:

Le second support magnétique peut être en fait une disquette ou un disque magnétique, mais on ne parlera ci-après que d'une disquette dénommée disquette fille.

Le passage d'un format non standard à un format standard s'effectue par l'intermédiaire d'un utilitaire spécifique autonome, autochargeable à partir de la disquette mère par exemple. C'est le cas de la solution présentée ci-après où cet utilitaire est enregistré sur la disquette mère et le logiciel proprement dit peut être alors considéré comme de simples données enregistrées à la suite de cet utilitaire. Le logiciel ne pourra donc être chargé et exécuté qu'après avoir été transféré sur la disquette fille par l'utilitaire autochargeable.

Un utilitaire qui exécute un tel transfert ne présente pas de caractéristiques particulières et il n'est donc pas nécessaire de le décrire plus en détail (bien entendu, la nature de cet utilitaire dépend des formats utilisés).

La disquette fille obtenue après cette opération de transfert est duplicable à l'aide d'un utilitaire standard de copie, les copies obtenues étant à leur tour duplicables.

Une disquette mère ne peut donner naissance qu'à une seule disquette fille. Pour cela, la disquette mère est remise à zéro à la fin de l'opération de transfert.

Le logiciel mémorisé sur le second support est affecté à une machine déterminée de l'utilisateur:

Le logiciel mémorisé sur la disquette fille va être affecté à une machine déterminée de l'utilisateur. Cette affectation s'effectue lors du transfert du logiciel de la disquette mère sur la disquette fille.

Toute machine possède un numéro d'identification ou identificateur qui est une donnée enregistrée dans un composant matériel pouvant être soit enfiché sur la machine avec la possibilité d'être déplacé par l'utilisateur d'une machine à une autre, soit intégré à celle-ci lors de la fabrication. Cette dernière solution est celle qui est généralement envisagée dans ce qui suit.

L'identificateur, qui peut être différent du numéro de série de la machine, est lisible par le logiciel, mais évidemment ne peut être modifié par celui-ci. Il peut être connu de l'utilisateur et affiché à la mise sous tension de la machine par exemple.

L'utilitaire qui assure le transfert du logiciel de la disquette mère sur la disquette fille prend en compte cet identificateur afin d'affecter le logiciel transféré à une machine donnée.

Le logiciel mémorisé sur la disquette fille est chargeable et exécutable, mais exclusivement sur la machine à laquelle il a été affecté lors de son transfert sur la disquette fille.

Par contre, l'identificateur de la machine est ignoré lors d'une opération de duplication de la disquette fille. Autrement dit, la duplication de la disquette fille peut être faite sur n'importe quelle machine de configuration appropriée, mais le logiciel mémorisé sur toute copie de la disquette fille ne peut être chargé et exécuté que sur une machine déterminée.

L'affectation à une machine déterminée de chaque exemplaire de logiciel acquis par l'utilisateur n'implique pas qu'une disquette fille ne puisse être exploitée sur plusieurs machines, étant évidemment entendu qu'en aucun cas il ne doit être possible d'exploiter un logiciel simultanément sur un nombre de machines supérieur au nombre d'exemplaires de logiciel acquis.

Il est souhaitable qu'une disquette fille puisse être exploitée sur plusieurs machines lorsque les fichiers de données sont mémorisés sur la disquette fille elle-même, ce qui est le cas, en particulier, des machines ne possédant qu'une seule unité de disquette. En effet, il peut paraître fastidieux d'avoir à transférer ces fichiers sur une nouvelle disquette fille chaque fois qu'il est nécessaire de poursuivre l'exploitation sur une machine différente de celle qui était utilisée précédemment.

Un utilitaire permettra donc de générer une disquette fille pouvant être exploitée sur plusieurs machines, cette disquette étant générée soit directement à partir des disquettes mère, soit à partir des disquettes fille créées dans un premier temps pour chaque machine individuellement.

Nous nous sommes placés jusqu'ici dans le cas où l'identificateur de la machine ne pouvait pas être dissocié de cette dernière, mais on remarquera que dans le cas où l'identificateur est mémorisé dans un composant enfichable pouvant être facilement déplacé d'une machine à l'autre, l'intérêt de l'utilitaire évoqué ci-dessus reste évident, en particulier dans l'hypothèse où le nombre d'exploitants est supérieur au nombre de machines utilisées.

En se reportant aux figures 1 et 2, il va être décrit ci-après les différentes étapes du procédé conforme à l'invention dans le cas de la diffusion d'un logiciel initial en fonction du parc informatique disponible chez un utilisateur.

En se référant à la figure 1, soit une disquette mère (DM) créée par un fournisseur et sur laquelle est mémorisé au moins un logiciel. Cette disquette mère (DM) présente les cractéristiques développées précédemment.

L'utilisateur qui acquiert un logiciel par l'intermédiaire d'une disquette mère (DM) non duplicable en format non standard doit le transférer sur un second support magnétique duplicable en format standard avant d'en effectuer le chargement pour exécution.

Il effectue cette transformation sur une machine (M1) par exemple, disposant au moins d'une unité de disquette. La disquette mère (DM) est placée sur l'unité de disquette et l'utilitaire de transformation également mémorisé sur la disquette mère (DM) est chargé dans la machine et exécuté.

Si la machine (M1) n'est pourvue que d'une unité de disquette, le second support est constitué dans ce cas par la disquette mère elle-même qui devient une disquette fille (DF). Si la machine est équipée de deux unités de disquettes, la disquette mère (DM) et la disquette fille (DF) créée à la fin de l'exécution de l'utilitaire de transformation peuvent être physiquement distinctes (la disquette mère sera alors remise à zéro).

Au cours de cette transformation qui fait passer d'un format non standard à un format standard, le logiciel mémorisé sur le second support créé est affecté à une machine de l'utilisateur, machine dénommée ci-après machine d'exploitation.

Comme indiqué précédemment, toute machine est identifiée par un identificateur interne que l'on supposera mémorisé dans un composant matériel intégré à la machine lors de la fabrication de celle-ci. Si la machine d'exploitation est la machine (M1) de l'utilisateur, l'utilitaire de transformation prend en compte l'identificateur (X1) de cette machine (M1) pour l'associer au logiciel qui va être mémorisé sur la disquette fille (DF).

Par contre, si la machine (M1) sur laquelle s'effectue la transformation mère – fille n'est pas la machine d'exploitation, il faut entrer de l'extérieur l'identificateur de la machine à laquelle va être affecté le logiciel mémorisé sur la disquette fille (DF). Si la machine d'exploitation est par exemple la machine (M2), l'identificateur (X2) de cette machine (M2) est rentré par un opérateur au clavier du pupitre (P) de la machine (M1).

Le logiciel mémorisé sur la disquette fille (DF) ainsi obtenue n'est chargeable et exécutable que sur la machine dont l'identificateur a été associé à ce logiciel. Etant donné que la disquette mère (DM) a été remise à zéro lors de la transformation mère – fille, la disquette fille (DF) obtenue est unique et il est prudent d'en effectuer au moins une copie. En effet, la disquette d'exploitation se dégrade à l'usage et au bout d'un certain temps d'utilisation doit être remplacée par une nouvelle copie.

La duplication de la disquette fille (DF) peut s'effectuer sur n'importe quelle machine (M) possédant la configuration appropriée. Bien entendu, tout logiciel mémorisé sur une disquette fille dupliquée n'est chargeable et exécutable que sur la machine d'exploitation identifiée lors de la création de la disquette fille.

Dans cet exemple, la machine d'exploitation (M1 ou M2) doit être équipée au moins d'une unité de disquette pour permettre de charger le logiciel en machine.

Sur la figure 2 est illustré le cas où la machine d'exploitation (M2) n'est pas équipée d'une unité de disquette. Dans ce cas, la transformation de la disquette mère (DM) doit être effectuée sur une machine (M1) disposant au moins de deux unités de disquettes ou d'une unité de disquette et d'une unité de disque. On peut supposer dans ce cas que la machine (M1) joue le rôle d'un contrôleur auquel peuvent être raccordées plusieurs machines telles que la machine d'exploitation (M2) et constituer par exemple un réseau local. Le contrôleur assure alors le chargement du logiciel dans la machine d'exploitation ainsi que la gestion du réseau et les liaisons vers l'extérieur.

Supposons que le contrôleur (M1) est équipé d'une unité de disquette et d'une unité de disque.

Le logiciel de la disquette mère (DM) va constituer une disquette fille image (DF) mémorisée sur un disque (D) du contrôleur (M1) après exécution de l'utilitaire de transfert. Au cours de ce transfert, l'identificateur (X2) de la machine d'exploitation (M2) est entré au clavier du pupitre (P) du contrôleur (M1) pour associer le logiciel constituant la disquette fille image (DF) à l'identificateur (X2) de la machine d'exploitation.

Une copie de la disquette fille image (DF) peut être faite sur une disquette ou un disque éventuellement.

Selon cette procédure, un même disque (D) peut mémoriser plusieurs disquettes fille images (DF1) dont les logiciels sont affectés à des machines d'exploitation différentes reliées au contrôleur (M1).

Si une machine d'exploitation demande l'exécution d'un logiciel, celui-ci sera trouvé sur le disque (D) après communication au contrôleur (M1) de l'identificateur de la machine d'exploitation et du nom du logiciel, puis chargé à partir du disque (D) sur la machine (M2) pour exécution.

La machine (M2) dans cet exemple doit être raccordée au contrôleur (M1), liaison schématisée par le bus (BUS).

Si par la suite, la machine d'exploitation (M2) n'est plus raccordée au contrôleur (M1) mais à un contrôleur (M3), il suffit de prendre une copie de la disquette fille image (DF) précitée et de la monter sur le contrôleur (M3) pour permettre l'exécution du logiciel par la machine d'exploitation (M2) dans les mêmes conditions que dans le cas où celle-ci était connectée au contrôleur (M1).

Si le contrôleur (M1) ne dispose pas d'une capacité de stockage externe suffisante pour mémoriser les différentes disquettes fille images, il est possible de créer physiquement une disquette fille (DF) comme dans le cas de la figure 1. Lorsque la machine d'exploitation (M2) raccordée au contrôleur (M1) demandera l'exécution d'un logiciel, il faudra préalablement monter sur ce contrôleur (M1) la disquette fille (DF) sur laquelle est mémorisé ce logiciel. Cette solution est moins souple que celle prévue dans le cas où l'on mémorise les logiciels sur un disque du contrôleur.

Dans le cas envisagé ci-dessus, l'identificateur de la machine est mémorisé dans un composant intégré à celle-ci lors de la fabrication. Dans ces conditions, si une machine d'exploitation est hors service, le logiciel associé à cette machine ne peut être chargé et exécuté sur une autre machine dont l'identificateur sera obligatoirement différent de celui initialement affecté à ce logiciel. Bien entendu, les programmes non protégés pourront être exécutés sur une autre machine sur laquelle il sera d'autre part possible évidemment de transférer les fichiers utilisateurs.

Par contre, si l'on admet que l'identificateur est mémorisé dans un composant enfichable pouvant être facilement oté et remis en place par l'utilisateur, il sera possible de poursuivre l'exploitation de la disquette sur une autre machine après avoir transféré l'identificateur sur celle-ci.

Pour augmenter la sécurité de l'ensemble, il est possible d'ajouter une protection supplémentaire pour éviter des fraudes tendant justement à faire exécuter un logiciel sur une autre machine que celle à laquelle ce logiciel est destiné.

La protection visée a pour but d'éviter qu'une copie d'un programme protégé mémorisé dans la bibliothèque de programmes de la disquette fille ne soit transférée sur une autre machine pour exécution.

Pour cela, tout logiciel protégé est chiffré avant d'être mémorisé sur la disquette mère. La clé de chiffrement peut être constituée par le nom du logiciel combiné avec le numéro de série de la disquette.

La diffusion du logiciel par l'intermédiaire d'une disquette mère et la génération de la disquette fille s'effectuent comme précédemment.

Cependant, lors du transfert du logiciel sur la disquette fille, la clé de chiffrement précitée, ainsi que le nom du logiciel, sont également enregistrés sur la disquette fille sous la forme d'un fichier, après avoir été eux-mêmes chiffrés par l'identificateur de la machine d'exploitation. Ainsi, il est créé un fichier dans lequel sont mémorisés, sous forme chiffrée, tous les noms des logiciels susceptibles d'être exécutés par la machine d'exploitation ainsi que la clé de chiffrement de ces logiciels.

Lors de la demande de chargement et l'exécution sur une machine d'un logiciel mémorisé sur une disquette fille, il faut vérifier si cette machine est bien la machine à laquelle ce logiciel est effectivement affecté. Pour cela, il est nécessaire de consulter le fichier précité après l'avoir préalablement déchiffré par l'identificateur associé à cette machine pour retrouver en clair le nom des logiciels. Si le nom du logiciel demandé est bien contenu dans le fichier, le logiciel est déchiffré avec la clé de chiffrement associée au nom de ce logiciel, et celui-ci est ensuite exécuté.

Dans le cas contraire, si le nom du logiciel demandé n'est pas répertorié dans le fichier, ce logiciel ne sera pas décrypté et ne pourra donc être exécuté s'il s'agit d'un logiciel protégé ayant donc été préalablement encrypté.

Bien entendu, la fonction de chiffrement peut être plus ou moins sophistiquée, mais il est souhaitable que le temps de chiffrement et de déchiffrement n'alourdisse pas sensiblement le processus de diffusion et d'exploitation du logiciel.

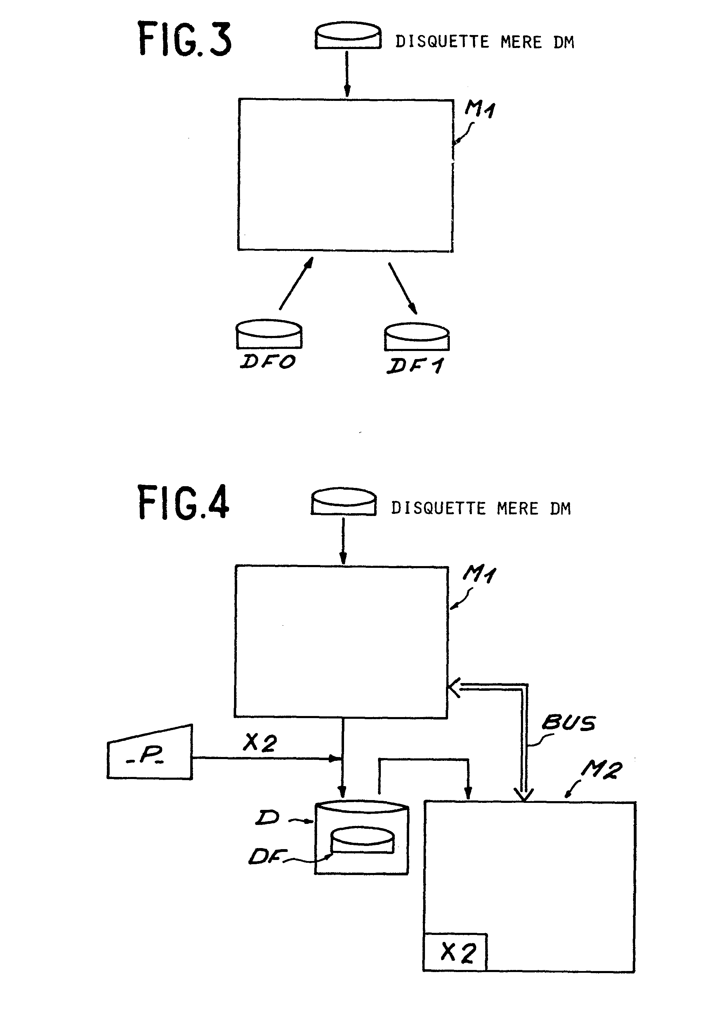

II – Diffusion d'un logiciel additionnel (figures 3 et 4)

Un logiciel additionnel est destiné à être ajouté à des logiciels déjà diffusés et mémorisés sur une disquette fille initiale (DF) ou une disquette fille image initiale (DF). Ces logiciels sont affectés à une machine déterminée de l'utilisateur selon la procédure décrite pour la diffusion d'un logiciel initial.

Comme précédemment, le fournisseur enregistre le logiciel additionnel sur une disquette mère (DM) non duplicable, ce logiciel n'étant pas affecté à une machine déterminée.

Sur cette disquette (DM) est également mémorisé un utilitaire autochargeable dont la fonction est d'ajouter le logiciel additionnel aux logiciels déjà mémorisés sur la disquette fille initiale (DF) précitée.

Sur la figure 3, on suppose que la machine d'exploitation sur laquelle va s'effectuer le transfert du logiciel additionnel est équipée d'une unité de disquette au minimum, la machine (M1) sur laquelle va s'effectuer le transfert étant équipée de deux unités de disquette ou d'une unité de disquette et d'une unité de disque. La disquette mère (DM) et la disquette fille initiale (DF0) sont montées sur la machine (M1) pour donner naissance à une nouvelle disquette fille (DF1) physiquement constituée par la disquette fille initiale (DF0). La disquette mère (DM) est pour sa part remise à zéro.

Au cours de cette opération, le logiciel additionnel est affecté à la machine d'exploitation utilisant la disquette fille initiale (DF0), l'identificateur de cette machine étant simplement lu sur cette disquette. Dans ces conditions, la machine (M1) peut être une machine autre que la machine d'exploitation.

Sur la figure 4, on suppose que la machine d'exploitation (M2) n'est pas équipée au minimum d'une unité de disquette. Ce cas nous ramène au cas de la figure 2, c'est-à-dire que l'on suppose que la machine d'exploitation (M2) est raccordée à un contrôleur (M1) disposant d'une unité de disquette et d'une unité de disque par exemple.

Comme précédemment, l'utilitaire de transfert et le logiciel additionnel sont enregistrés sur une disquette mère (DM) et l'utilitaire va transférer le logiciel additionnel sur la disquette fille image (DF) mémorisée sur le disque (D) du contrôleur (M1).

Comme ce logiciel doit être affecté à la machine d'exploitation (M2), l'utilitaire va associer ce logiciel à l'identificateur (X2) de cette machine.

Pour cela, il faut que cet l'identificateur (X2) soit entré au clavier du pupitre (P) du contrôleur (M1), étant donné que le disque (D) peut mémoriser les logiciels affectés à des machines d'exploitation différentes.

A la fin de ce transfert, la disquette mère est remise à zéro.

III – Diffusion d'une nouvelle version de logiciel

Ce type de diffusion a pour but de remplacer une version de logiciel périmée. Pour cela, il est nécessaire d'utiliser la même procédure que celle utilisée dans le cas de la diffusion d'un logiciel additionnel.

**Revendications**

1. Procédé de protection d'un logiciel diffusé par un fournisseur à des utilisateurs disposant d'au moins une machine de traitement de l'information sur laquelle et uniquement sur elle est rendue chargeable et exécutable ce logiciel, caractérisé en ce qu'il consiste:

a) au niveau du fournisseur:

– à enregistrer un exemplaire de ce logiciel sur un premier support magnétique portatif tel qu'une disquette dénommée disquette mère, ce logiciel n'étant pas affecté à une machine déterminée de l'utilisateur,

– à rendre cette disquette mère non directement duplicable,

– et à diffuser une disquette mère pour chaque exemplaire de logiciel acquis par l'utilisateur,

b) au niveau de l'utilisateur à l'aide d'un utilitaire de transformation:

– à transférer l'exemplaire de logiciel mémorisé sur une disquette mère sur un second support magnétique duplicable,

– à rendre exécutable cet exemplaire de logiciel mémorisé sur ce second support uniquement par une machine déterminée de l'utilisateur,

– et à remettre à zéro la disquette mère pour que celle-ci ne puisse pas donner naissance à un autre exemplaire de logiciel exécutable sur une autre machine.

2. Procédé selon la revendication 1, caractérisé en ce qu'il consiste à créer toute disquette mère selon un format non standard pour la rendre non directement duplicable.

3. Procédé selon la revendication 1 ou 2, caractérisé en ce que tout second support précité est créé selon un format standard, ce qui a pour effet de le rendre duplicable.

4. Procédé selon la revendication 3, caractérisé en qu'il consiste à autoriser la duplication du second support précité par toute machine de l'utilisateur, mais seule la machine déterminée précitée ou machine d'exploitation de l'utilisateur peut exécuter tout exemplaire de logiciel dupliqué à partir du second support.

5. Procédé selon l'une des revendications précédentes, caractérisé en ce que la transformation disquette mère – second support s'effectue par un utilitaire autochargeable à partir de la disquette mère.

6. Procédé selon l'une des revendications précédentes, caractérisé en ce qu'il consiste, pour rendre exécutable tout logiciel sur le second support précité uniquement par la machine d'exploitation précitée, à personnaliser le second support avec un identificateur propre à la machine d'exploitation, cet identificateur non modifiable étant soit lisible dans un composant de la machine si cette opération s'effectue à partir de la machine d'exploitation, soit entré depuis l'extérieur lorsque cette opération s'effectue sur une machine autre que la machine d'exploitation.

7. Procédé selon la revendication 6, caractérisé en ce qu'il consiste à inscrire l'identificateur d'une machine dans un composant matériel soit enfichable dans la machine, soit intégré à celle-ci lors de la fabrication.

8. Procédé selon l'une des revendications précédentes, caractérisé en ce qu'il consiste à autoriser l'exploitation d'une disquette fille sur plusieurs machines en mettant en œuvre un utilitaire permettant de regrouper sur la même disquette fille plusieurs exemplaires de logiciel rendus exécutable à ces différentes machines.

9. Procédé selon l'une des revendications 1 à 8, caractérisé en ce qu'il consiste dans le cas de la diffusion d'un logiciel additionnel à un logiciel initial déjà mémorisé sur un second support, à enregistrer sur une disquette mère ce logiciel additionnel et un utilitaire autochargeable, à transférer ce logiciel sur le second support précité par exécution dudit utilitaire et à remettre à zéro la disquette mère.

10. Procédé selon l'une des revendications 1 à 9, caractérisé en ce qu'il consiste dans le cas de la diffusion d'une nouvelle version d'un logiciel destiné à remplacer un logiciel déjà transféré sur un second support, à enregistrer sur une disquette mère cette nouvelle version de logiciel et un utilitaire autochargeable, à remplacer le logiciel mémorisé sur le second support par la nouvelle version du logiciel à la suite de l'exécution dudit utilitaire et à remettre à zéro la disquette mère.

11. Procédé selon l'une des revendications précédentes, caractérisé en ce qu'il consiste à chiffrer le logiciel sur la disquette mère précitée, la clé de chiffrement étant par exemple constituée par le nom du logiciel et le numéro de série de la disquette, à constituer dans la machine d'exploitation un fichier de tous les noms des logiciels destinés à être exécutés par cette machine, ce fichier contenant pour chaque nom de logiciel la clé de chiffrement du logiciel, le nom du logiciel et la clé étant eux-mêmes chiffrés avec une clé constituée par l'identificateur de la machine d'exploitation précitée.

12. Procédé selon la revendication 11, caractérisé en ce qu'il consiste, lors d'une demande de chargement d'un logiciel sur une machine, à déchiffrer ledit fichier à partir de l'identificateur de la machine d'exploitation, à déterminer si le nom du logiciel demandé est bien contenu dans ce fichier, et à déchiffrer ce logiciel à partir de la clé de chiffrement précitée pour obtenir un logiciel chargeable et exécutable sur la machine d'exploitation.

## Patentansprüche

1. Verfahren zum Schutz eines Programms, das an die Benutzer von einem Lieferanten vertrieben wird, der mindestens über eine Datenverarbeitungsmaschine verfügt, auf der und nur auf der dieses Programm geladen und ausgeführt werden kann, dadurch gekennzeichnet, dass es aus folgenden Schritten besteht:
   a) Beim Lieferanten:
   - Aufnehmen eines Exemplars dieses Programms auf einen ersten tragbaren Magnetträger, wie eine Diskette, Mutterdiskette genannt, wobei dieses Programm nicht einer bestimmten Maschine des Benutzers zugeordnet ist,
   - Verhindern, dass diese Mutterdiskette direkt duplizierbar ist,
   - und Vertreiben einer Mutterdiskette für jedes vom Benutzer gekaufte Programmexemplar,
   b) beim Benutzer mit Hilfe eines Umwandlungs-Hilfsprogramms:
   - Übertragen des auf einer Mutterdiskette gespeicherten Programms auf einen zweiten, duplizierbaren Magnetträger,
   - Bewirken, dass das auf dem zweiten Träger gespeicherte Programmexemplar nur durch eine bestimmte Maschine des Benutzers ausführbar wird,
   - Löschen der Mutterdiskette, damit durch diese nicht ein anderes Programmexemplar geboren werden kann, das auf einer anderen Maschine ausführbar ist.

2. Verfahren nach Anspruch 1, dadurch gekennzeichnet, dass es darin besteht, jede Mutterdiskette in einem Nicht-Standardformat herzustellen, um sie nicht direkt kopierbar zu machen.

3. Verfahren nach Anspruch 1 oder 2, dadurch gekennzeichnet, dass jeder der vorher genannten zweiten Träger in einem Standardformat erzeugt wird, was ihn duplizierbar macht.

4. Verfahren nach Anspruch 3, dadurch gekennzeichnet, dass es darin besteht, die Duplizierung des zweiten Trägers durch jede Maschine des Benutzers zu erlauben, wobei jedoch nur die vorher genannte bestimmte Maschine oder Verwertungsmaschine des Benutzers jedes vom zweiten Träger duplizierte Programmexemplar ausführen kann.

5. Verfahren nach einem der vorhergehenden Ansprüche, dadurch gekennzeichnet, dass die Umwandlung Mutterdiskette – zweiter Träger durch ein Hilfsprogramm ausgeführt wird, das von der Mutterdiskette selbstladbar ist.

6. Verfahren nach einem der vorhergehenden Ansprüche, dadurch gekennzeichnet, dass es, um jedes Programm auf dem vorher genannten zweiten Träger nur durch die Verwertungsmaschine ausführbar zu machen, darin besteht, den zweiten Träger mit einem der Verwertungsmaschine eigenen Unterscheidungsmerkmal zu kennzeichnen, wobei dieses nicht veränderbare Unterscheidungsmerkmal entweder in einem Bestandteil der Maschine lesbar ist, falls dieser Vorgang von der Verwertungsmaschine ausgehend abläuft, oder von aussen eingegeben wird, wenn dieser Vorgang auf einer anderen als der Verwertungsmaschine abläuft.

7. Verfahren nach Anspruch 6, dadurch gekennzeichnet, dass es darin besteht, das Unterscheidungsmerkmal einer Maschine in ein materielles Bauteil einzuschreiben, das entweder in die Maschine eingesteckt werden kann, oder in diese bei der Herstellung eingebaut wird.

8. Verfahren nach einem der vorhergehenden Ansprüche, dadurch gekennzeichnet, dass es darin besteht, die Verwertung einer Tochterdiskette auf mehreren Maschinen zu erlauben, indem ein Hilfsprogramm in Betrieb gesetzt wird, das es erlaubt, auf derselben Tochterdiskette mehrere Exemplare des auf diesen verschiedenen Maschinen ausführbar gemachten Programms zusammenzufassen.

9. Verfahren nach einem der Ansprüche 1 bis 8, dadurch gekennzeichnet, dass es darin besteht, im Falle des Vertriebs eines Zusatzprogramms zu einem ursprünglichen, schon auf dem zweiten Träger gespeicherten, ursprünglichen Programm auf eine Mutterdiskette dieses Zusatzprogramm und ein selbstladbares Hilfsprogramm aufzunehmen, dieses Programm auf den vorher genannten zweiten Träger durch Ausführung des Hilfsprogramms zu übertragen und die Mutterdiskette zu löschen.

10. Verfahren nach einem der Ansprüche 1 bis 9, dadurch gekennzeichnet, dass es darin besteht, im Falle des Vertriebs einer neuen Programmversion, die das bereits auf den zweiten Träger übertragene Programm ersetzen soll, auf eine Mutterdiskette diese neue Programmversion und ein selbstladbares Hilfsprogramm aufzunehmen, das auf dem zweiten Träger gespeicherte Programm durch die neue Programmversion nach Ausführung des Hilfsprogramms zu ersetzen und die Mutterdiskette zu löschen.

11. Verfahren nach einem der vorhergehenden Ansprüche, dadurch gekennzeichnet, dass es darin besteht, das Programm auf der Mutterdiskette zu chiffrieren, wobei der Chiffrierungsschlüssel z.B. vom Programmnamen und der Seriennummer der Diskette gebildet wird, in der Verwertungsmaschine eine Datei aller Programmnamen zu bilden, die von dieser Maschine ausgeführt werden soll, wobei diese Datei für jeden Programmnamen den Chiffrierungsschlüssel des Programms enthält, und wobei der Programmname und der Schlüssel ihrerseits durch einen Schlüssel chiffriert sind, der durch das Unterscheidungsmerkmal der vorher genannten Verwertungsmaschine gebildet ist.

12. Verfahren nach Anspruch 11, dadurch gekennzeichnet, dass es darin besteht, bei einem Befehl des Ladens eines Programms auf eine Maschine die Datei vom Unterscheidungsmerkmal der Verwertungsmaschine ausgehend zu dechiffrieren, festzustellen, ob der gefragte Programmname in dieser Datei enthalten ist, und das Programm vom vorher genannten Chiffrierungsschlüssel ausgehend zu dechiffrieren, um ein auf der Verwertungsmaschine ladbares und ausführbares Programm zu erhalten.

**Claims**

1. Method for the protection of software distributed by a supplier to users having available at least one data processing machine on which and only on which this software may be loaded and implemented, characterised in that it consists in:
a) at the supplier's location:
– recording a copy of this software on a first portable magnetic carrier such as a disc, designated as a mother disc, this software not being allocated to a particular one of the user's machines,
– organising this mother disc so that it may not be duplicated directly,
– and distributing a mother disc for each copy of software acquired by the user,
b) at the user's location, and by means of a conversion facility:
– in transferring the copy of software recorded on a mother disc on to a second duplicatable magnetic carrier,
– organising this copy of software stored on this second carrier so that it may be executed only by a particular one of the user's machines,
– and in performing a zero reset operation on the mother disc so that the same cannot produce another copy of software executable on another machine.

2. Method according to claim 1, characterised in that it consists in producing each mother disc in a non-standard format so that it cannot be duplicated directly.

3. Method according to claim 1 or 2, characterised in that all the aforesaid second carriers are produced according to a standard format, with the result that they are duplicatable.

4. Method according to claim 3, characterised in that it consists in authorising the duplication of the aforesaid second carrier by any of the user's machines, but only the aforesaid particular machine or the user's working machine can execute any copy of the software duplicated from the second carrier.

5. Method according to any one of the preceding claims, characterised in that the transformation from the mother disc to the second carrier is performed by means of a facility automatically loadable from the mother disc.

6. Method according to any one of the preceding claims, characterised in that so that any software on the aforesaid second carrier may be made executable solely by means of the aforesaid working machine, it consists in personalising the second carrier with an identity code specific to the working machine, this unchangeable identity code either being readable in a part of the machine if this operation is performed on the working machine, or entered from the outside if this operation is performed on a machine other than the working machine.

7. Method according to claim 6, characterised in that it consists in recording the identity code of a machine in a material component which may either be plugged into the machine or integrated in the same during its production.

8. Method according to any one of the preceding claims, characterised in that it consists in authorising the utilisation of a daughter disc on several machines by means of a facility permitting to group on one and the same daughter disc several copies of software made executable on these different machines.

9. Method according to any one of the claims 1 to 8, characterised in that in the case of the distribution of software additional to the software already stored on a second carrier, it consists in recording this additional software and a self-loading facility on a mother disc, in transferring this software on to the aforesaid second carrier by execution of the said facility and in performing a zero reset operation on the mother disc.

10. Method according to any one of the claims 1 to 9, characterised in that in the case of the distribution of a new version of software intended to replace software already transferred on to a second carrier, it consists in recording this new version of software and a self-loading facility on to a mother disc, in replacing the software stored on the second carrier by the new version of the software following the implementation of the said facility, and in performing a zero reset operation on the mother disc.

11. Method according to any one of the preceding claims, characterised in that it consists in encoding the software on the said mother disc, the code key being formed for example by the name of the software and the serial number of the disc, in collating in the working machine an index of all the names of the software intended to be executed by this machine, this index containing the coding key of the software for each software name, the name of the software and the key being themselves codes by means of a key formed by the identification code of the aforesaid working machine.

12. Method according to claim 11, characterised in that at the time of a request for loading software in a machine, it consists in decoding the said index on the basis of the identity code of the working machine, in establishing whether the name of the software requested is actually contained in this index, and in decoding this software on the basis of the said decoding key in order to obtain software which may be loaded and executed on the working machine.

FIG.1

DISQUETTE MERE DM

TRANSFORMATION

MERE → FILLE

M1

X1

X2

_P_

DISQUETTE FILLE DF

M2

ƒ(M1,M2)

DUPLICATION

EXPLOITATION

X

DF

11

# FIG.2

DISQUETTE MERE DM

TRANSFORMATION

MERE ⟶ FILLE

$M_1$

BUS

.P.

$X_2$

$DF$

$D$

DUPLICATION

IMAGE
DISQUETTE
FILLE DF

$M_2$

EXPLOITATION

$X_2$

BUS

$M_3$

$D$

$DF$

13

# FIG.3

DISQUETTE MERE DM

M1

DF0     DF1

# FIG.4

DISQUETTE MERE DM

M1

-P-     X2

BUS

M2

D

DF

X2